# EUROPEAN PATENT SPECIFICATION

(11) **EP 1 970 741 B1**
(45) Date of publication and mention of the grant of the patent: **22.12.2010**
(21) Application number: 07103961.4
(22) Date of filing: 12.03.2007
(51) Int. Cl.: G02B 7/08, G02B 13/00

(54) **Miniature lens focusing mechanism**
Mechanismus zur Fokussierung von Miniaturlinsen
Mécanisme de mise au point de lentilles miniatures

(43) Date of publication of application: 17.09.2008
(73) Proprietor: TDK TAIWAN CORP., Taipei (TW)
(72) Inventor: Wu, Fu-Yuan, Yangmei Taoyuan (TW)
(74) Representative: Viering, Jentschura & Partner

(56) References cited:
- JP-A- 2004 280 031
- JP-A- 2006 227 101

## Description

### FIELD OF THE INVENTION

T The present invention relates to a miniature lens focusing mechanism, and more particularly to a miniature lens focusing mechanism that electromagnetically drives a lens to displace and thereby achieves the function of lens focusing.

### BACKGROUND OF THE INVENTION

With the advancement in scientific technologies and the modularization and miniaturization of camera lens, it is now possible to produce digital cameras having a very small volume, and most of currently available mobile phones are provided with the function of a digital camera. In a miniature lens, there are many different auto-focusing driving mechanisms. Among others, voice coil motor (VCM) is the currently most widely adopted auto-focusing driving mechanism. The VCM has the advantages of small volume, low power consumption, accurately actuated displacement, and cost-effective, and is therefore very suitable for short-distance driving in miniature lens auto-focusing.

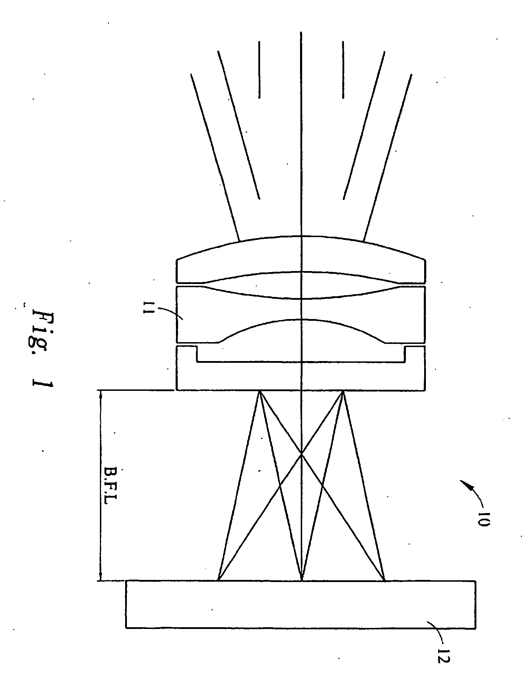

Fig. 1 schematically shows the basic principle of lens focusing. In a general focusing unit 10, there are included a lens assembly 11 and a photo sensor 12. With the lens assembly 11, light reflected from an object can form an image on the photo sensor 12. In the case a distance between the lens assembly 11 and the photo sensor 12 is fixed, that is, the lens assembly 11 is a fixed focal lens, only the object located more than two to three meters away from the lens can be clearly shown on the camera. If it is desired to own the macro shooting function, it is necessary to use an additional lens focusing unit to displace the lens assembly, so as to change the distance between the lens assembly and the photo sensor and thereby achieve the purpose of focusing. When the lens assembly is provided with the zoom function, multiple lens groups inside the lens assembly must also be displaced corresponding to the changes in zoom ratio. In this case, the focusing unit must also be included in the lens module to enable the displacement of the lens groups.

In the conventional focusing mechanism, the lens assembly is displaced mainly via a manually controlled mechanism, and is therefore not so convenient for operation. It is therefore tried by the inventor to develop an electromagnetically driven lens focusing mechanism, which not only has simplified design and improved assembling process to enable reduced manufacturing cost, but also overcomes the drawbacks in the conventional lens focusing mechanism, and can be advantageously applied to mobile phone, notebook computer, personal digital assistant (PDA), etc.

JP 2006-227101 A discloses a lens drive control system for a movable lens which waives detecting the position of the movable lens.

JP 2004-280031 A discloses a lens driving device equipped with a U-shaped cylindrical yoke having mounted thereon a magnet.

### SUMMARY OF THE INVEMION

A primary object of the present invention is to provide a miniature lens focusing mechanism that has small volume and allows a largest possible lens, and electromagnetically drives the lens to displace and thereby achieves the function of focusing.

The present invention provides a miniature lens focusing mechanism having the technical features described in the independent claim. Preferred embodiments of the present invention are described in the dependent claims.

To achieve the above and other objects, the miniature lens focusing mechanism according to the present invention includes a lens holder for holding a lens therein, at least one winding element surrounding the lens holder, at least one elastic element connected to the lens holder and the at least one winding element, and at least one magnetic element. When a current is supplied, the current is transmitted via the elastic element to the winding element, so that an acting force is produced between the winding element and the magnetic element to displace the lens holder and accordingly, achieve the function of auto-focusing.

### BRIEF DESCRIPTION OF THE DRAWINGS

The structure and the technical means adopted by the present invention to achieve the above and other objects can be best understood by referring to the following detailed description of the preferred embodiments and the accompanying drawings, wherein

Fig. 1 is a schematic view showing a basic lens focusing principle;

Fig. 2 is an exploded perspective view of a miniature lens focusing mechanism according to the present invention;

Fig. 3 is a schematic front view of the miniature lens focusing mechanism of the present invention;

Fig. 4 is a perspective view of four magnetic elements used in the miniature lens focusing mechanism of the present invention;

Fig. 5 is a front view of an elastic element used in the miniature lens focusing mechanism of the present invention; and

Fig. 6 is a sectional view of the miniature lens focusing mechanism of the present invention.

### DETAILED DESCRIPTION OF THE INVENTION

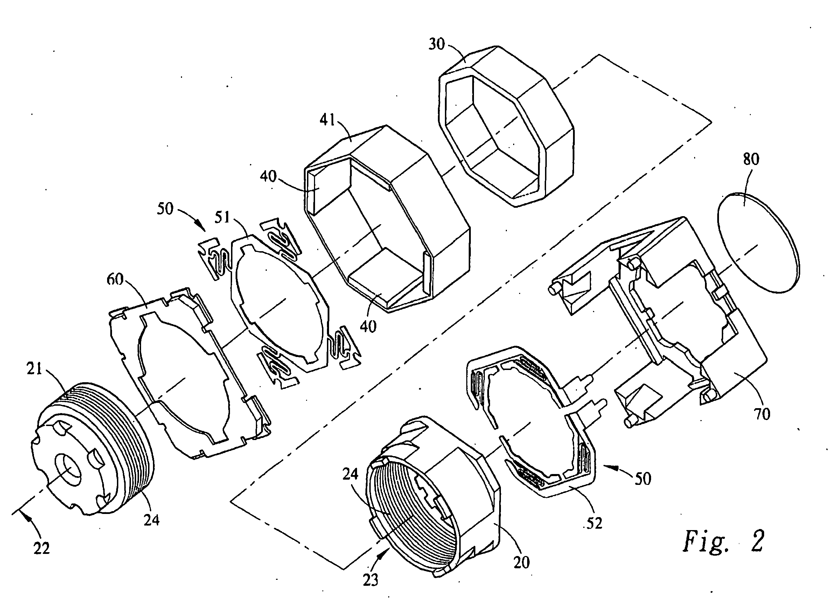

Please refer to Fig. 2 that is an exploded perspective view of a miniature lens focusing mechanism according to the present invention. As shown, the miniature lens focusing mechanism includes a lens holder 20, an upper cover 60, at least one elastic element 50, four magnetic elements 40, a winding element 30, a frame 70, and a photo sensor 80.

The lens holder 20 is used to hold a lens 21 therein. The lens 21 defines an axis 22, on which the lens 21 focuses light. The lens holder 20 is a hollow annular member and defines a through bore 23 along the axis 22. The hollow lens holder 20 is internally provided and the lens 21 is externally provided with corresponding screw threads 24, so that the lens 21 may be screwed in the through bore 23 of the lens holder 20.

The frame 70 is a hollow member, a projected inner profile of which in the direction of the axis 22 corresponds to an outer profile of the lens holder 20, such that when the lens holder 20 is received in the frame 70, the lens holder 20 is limited to linearly displace in the frame 70 without rotating relative to the frame 70.

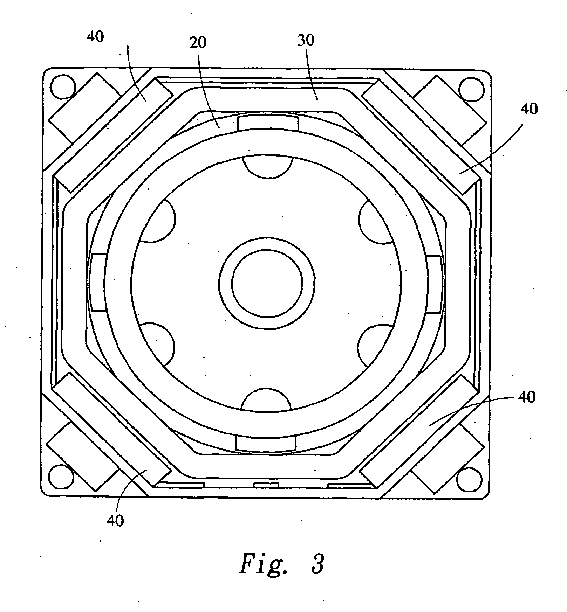

As can be seen from Fig. 3, the winding element 30 is an octagonal member surrounded around the lens holder 20. When the lens 21 is screwed into the bore 23, torsion is produced. The octagonal winding element 30 is able to limit the angle by which the lens 21 may be turned to mount in the bore 23, so as to protect the lens holder 20 against a damaged internal structure by an excessive torsional force.

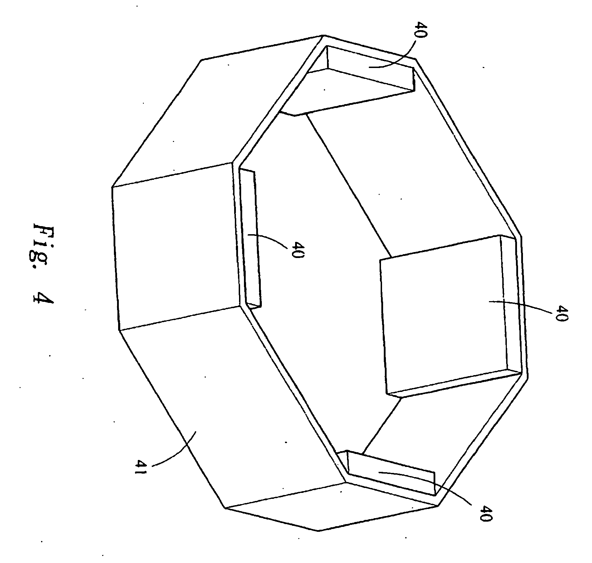

Please refer to Figs. 3 and 4 at the same time. The magnetic elements 40 are four permanent magnets located at the outer side of four of the eight sides of the octagonal winding element 30 to equally space from one another, allowing the lens 21 to have the largest possible diameter without increasing the overall volume of the lens focusing mechanism. The four magnetic elements 40 have a common outer ring member 41, which is in the shape of an octagon and made of a metal material to effectively close the magnetic field, so as to produce an even stronger and more efficient inner magnetic field without the risk of magnetic leakage.

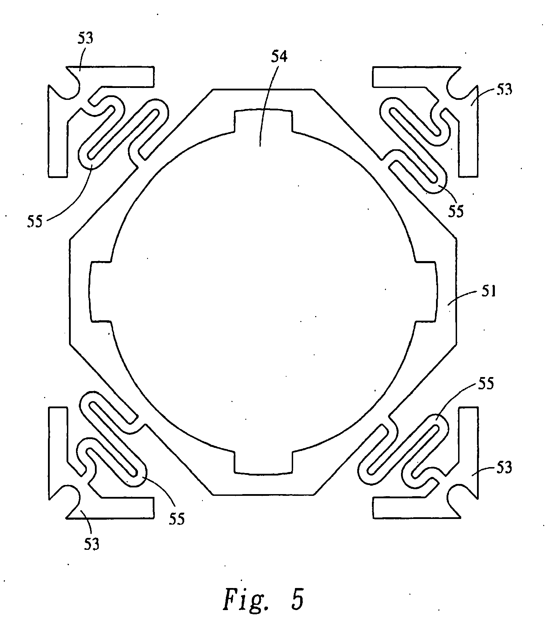

Please refer to Figs. 2 and 5 at the same time. The at least one elastic element 50 supports and connects the lens holder 20 to the frame 70, so that the lens holder 20 is suspended at a center of the frame 70. In the illustrated embodiment of the present invention, the at least one elastic element 50 includes an upper plate spring 51 and two lower plate springs 52. The upper plate spring 51 is connected to the lens holder 20, the frame 70, and the upper cover 60; and the lower plate springs 52 are connected to the lens holder 20 and the frame 70. The upper plate spring 51 defines a round opening 54, and has four fixing sections 53 and four serpentine sections 55. The round opening 54 is centered on the upper plate spring 51 to correspond to and hold the lens holder 20 in place. The fixing sections 53 are located outside four of eight sides of the octagonal plate spring 51 to equally space from one another and fixedly engage with the upper cover 60 and four pins correspondingly provided on the frame 70. The four serpentine sections 55 are extended between the four fixing sections 53 and the plate spring 52, so as to connect the plate spring 51 to the upper cover 60 and the frame 70. The four serpentine sections 55 effectively absorb impact, vibration, and reaction forces in X, Y, and Z directions, and function to even the reaction forces, so that the upper plate spring 51 is not subjected to deformation easily.

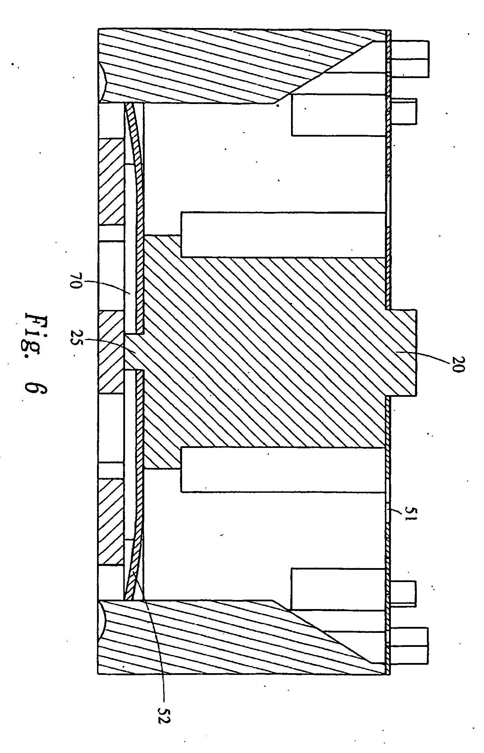

Fig. 6 is a sectional view of the miniature lens focusing mechanism of the present invention. As shown, the lens holder 20 is further provided at a predetermined position with a protruded section 25, which is pressed against and supported on a bottom of the hollow frame 70, such that the lower plate spring 52 is bent to produce a downward force, which always holds the lens holder 20 in place no matter the lens holder 20 is faced upward or downward, or in a horizontal position. That is, the lens holder 20 would not vibrate or displace when it is located at an initial position in any direction.

When the miniature lens focusing mechanism of the present invention operates, the winding element 30 and the magnetic elements 40 cooperate with one another to drive the lens holder 20 to linearly displace forward or rearward in the frame 70 along the axis 22. More specifically, when an electric current is supplied to the miniature lens focusing mechanism, the current is transmitted via the lower plate spring 52 to the winding element 30, so that the winding element 30 produces a magnetic field and accordingly, a push force, and cooperates with the magnetic elements 40 to drive the lens holder 20 to displace, so that the lens holder 20 and the lens 21 held in the lens holder 20 are fixed to a focused position to complete the lens focusing. The push force produced and provided by the winding element 30 is in a direction the same as that of a push produced by the magnetic elements 40 to thereby provide the lens focusing mechanism a substantially doubled push force to drive the lens holder 20 and largely increase the performance of the electromagnetically driven lens holder 20.

In the present invention, the octagonal winding element 30 protects the lens holder 20 against damaged internal structure by an excessive torsional force; the magnetic elements 40 enable the largest possible lens 21 without increasing the overall volume of the lens focusing mechanism; the outer ring member 41 for the magnetic elements 40 not only enables stronger and more efficient inner magnetic field, but also prevents magnetic leakage; the serpentine sections 55 protect the upper plate spring 51 against easy deformation; the protruded section 25 ensures that the lens holder 20 is not vibrated or displaced in an initial position in any direction. In conclusion, with the electromagnetically driven lens holder 20 and lens 21, the miniature lens focusing mechanism of the present invention has the advantages of good driving effect, small volume, large lens, and low manufacturing cost.

The present invention has been described with a preferred embodiment thereof and it is understood that many changes and modifications in the described embodiment can be carried out without departing from the scope and the spirit of the invention that is intended to be limited only by the appended claims.

## Claims

1. A miniature lens focusing mechanism, comprising:
an upper cover (60)
a lens (21);
a lens holder (20) for holding said lens (21) therein, wherein said lens holder (20) is a hollow annular member, has an outer profile, defines a through hole along an axis (22), and is internally provided with a screw thread (24), and wherein said lens (21) is externally provided with a corresponding screw thread (24), so that the lens (21) may be screwed in the through bore of the lens holder (20);
a frame (70) being a hollow member and having a projected inner profile, wherein the projected inner profile corresponds to the outer profile of the lens holder (20) such that when the lens holder (20) is received in the frame (70), the lens holder (20) is limited to linearly displace in the frame (70) without rotating relatively to the frame (70);
at least one octagonal winding element (30) surrounding the lens holder (20), wherein the octagonal winding element (30) is able to limit the angle by which the lens (21) may be turned in the bore (23), so as to protect the lens holder (20) against a damaged internal structure by an excessive torsional force;
at least one elastic element (50) connected to the lens holder (20) and the octagonal winding element (30),
wherein the at least one elastic element (50) supports and connects the lens holder (20) to the frame (70), so that the lens holder (20) is suspended at a center of the frame (70), and wherein the at least one elastic element (50) includes an upper plate spring (51), which upper plate spring is connected to the lens holder (20), the frame (70), and the upper cover (60), and two lower plate springs (52) connected to the lens holder (20) and the frame (70); and
four magnetic elements (40) located at the outer side of four of the eigth sides of the octagonal winding element (30) to equally space from one another and having a common outer ring member (41), which is in shape of an octagon;
wherein the lens holder (20) is provided at a predetermined position with a protruded section (25),
which is pressed against and supported on a bottom of the hollow frame (70), such that the lower plate spring (52) is bent to produce a downward force, which always holds the lens holder in place no matter the lens holder (20) is faced upward or downward, or in a horizontal position;
wherein the at least one winding element (3) and the at least one magnetic element (40) cooperate on operation of the miniature lens focusing mechanism with one another to drive the lens holder (20) to linearly displace forward or rearward in the frame (70) along the axis (22),
whereby the miniature lens focusing mechanism is adapted to transmit a current, when applied, via the at least one elastic element (50) to the at least one octagonal winding element (30), so that an acting force is produced between the octagonal winding element (30) and the magnetic element (40) to displace the lens holder (20) and, accordingly, achieve the purpose of lens focusing.

2. The miniature lens focusing mechanism as claimed in claim 1, wherein the at least one upper plate spring (51) has at least one serpentine section (55).

3. The miniature lens focusing mechanism as claimed in claim 1, wherein the at least one magnetic element (40) is located on an inner wall of the octagonal outer ring member (41).

## Patentansprüche

1. Ein Miniaturlinsen-Fokussierungsmechanismus, aufweisend:
eine obere Abdeckung (60),
eine Linse (21),
eine Linsenhalterung (20), um die Linse (21) darin zu halten, wobei die Linsenhalterung (20) ein hohles ringförmiges Element ist, ein Außenprofil aufweist, entlang einer Achse (22) ein Durchgangsloch definiert und innen mit einem Schraubengewinde (24) versehen ist, und wobei die Linse (21) außen mit einem korrespondierenden Schraubengewinde (24) versehen ist, so dass die Linse (21) in die Durchgangsbohrung der Linsenhalterung (20) geschraubt werden kann,
einen Rahmen (70), der ein hohles Element ist und ein hervorstehendes Innenprofil aufweist, wobei das hervorstehende Innenprofil mit dem Außenprofil der Linsenhalterung (20) korrespondiert, so dass, wenn die Linsenhalterung (20) in dem Rahmen (70) aufgenommen ist, die Linsenhalterung (20) darauf beschränkt ist, sich in dem Rahmen (70) linear zu bewegen, ohne sich relativ zu dem Rahmen (70) zu drehen,
mindestens ein achteckiges Wicklungselement (30), das die Linsenhalterung (20) umgibt, wobei das achteckige Wicklungselement (30) in der Lage ist, den Winkel zu begrenzen, um den die Linse (21) in der Bohrung (23) gedreht werden kann, um die Linsenhalterung (20) vor einer beschädigten inneren Struktur durch eine übermäßige Torsionskraft zu schützen,
mindestens ein elastisches Element (50), das mit der Linsenhalterung (20) und dem achteckigen Wicklungselement (30) verbunden ist, wobei das mindestens eine elastische Element (50) die Linsenhalterung (20) abstützt und mit dem Rahmen (70) verbindet, so dass die Linsenhalterung (20) an einer Mitte des Rahmens (70) aufgehängt ist, und wobei das mindestens eine elastische Element (50) aufweist: eine obere Blattfeder (51), wobei die obere Blattfeder mit der Linsenhalterung (20), dem Rahmen (70) und der oberen Abdeckung (60) verbunden ist, und zwei untere Blattfedern (52), die mit der Linsenhalterung (20) und dem Rahmen (70) verbunden sind, und
vier Magnetelemente (40), die derart an der Außenseite von vier der acht Seiten des achteckigen Wickelelements (30) angeordnet sind, dass sie im gleichen Abstand zueinander positioniert sind und ein gemeinsames äußeres Ringelement (41) aufweisen, das die Form eines Achtecks aufweist,
wobei die Linsenhalterung (20) an einer vorbestimmten Position mit einem hervorspringenden Abschnitt (25) versehen ist, der gegen einen Boden des hohlen Rahmens (70) gedrückt und an diesem abgestützt wird, so dass die untere Blattfeder (52) gebogen wird, um eine Abwärtskraft herzustellen, die die Linsenhalterung immer an Ort und Stelle hält, unabhängig davon, ob die Linsenhalterung (20) nach oben oder nach unten gewandt ist oder in einer horizontalen Position ist,
wobei das mindestens eine Wicklungselement (3) und das mindestens eine Magnetelement (40) beim Bedienen des Miniaturlinsen-Fokussierungsmechanismus miteinander zusammenwirken, um die Linsenhalterung (20) anzutreiben, sich in dem Rahmen (70) entlang der Achse (22) linear nach vorne und nach hinten zu bewegen,
wodurch der Miniaturlinsen-Fokussierungsmechanismus angepasst ist, einen Strom, wenn er angelegt wird, über das mindestens eine elastische Element (50) auf das mindestens eine achteckige Wicklungselement (30) zu übertragen, so dass zwischen dem achteckigen Wicklungselement (30) und dem Magnetelement (40) eine Wirkungskraft erzeugt wird, um die Linsenhalterung (20) zu bewegen und entsprechend den Zweck des Linsenfokussierens zu erreichen.

2. Der Miniaturlinsen-Fokussierungsmechanismus gemäß Anspruch 1, wobei die mindestens eine obere Blattfeder (51) mindestens einen Serpentinenabschnitt (55) aufweist.

3. Der Miniaturlinsen-Fokussierungsmechanismus gemäß Anspruch 1, wobei das mindestens eine Magnetelement (40) an einer Innenwand des achteckigen äußeren Ringelements (41) positioniert ist.

## Revendications

1. Mécanisme de focalisation de lentille miniature, comprenant : une coiffe supérieure (60) ;
une lentille (21);
un porte-lentille (20) pour y retenir ladite lentille (21), dans lequel ledit porte-lentille (20) est un élément annulaire creux, a un profil externe, définit un trou traversant le long d'un axe (22) et est doté intérieurement d'un filet de vis (24), et dans lequel ladite lentille (21) est dotée extérieurement d'un filet de vis correspondant (24), de sorte que la lentille (21) puisse être vissée dans le trou traversant du porte-lentille (20) ;
un châssis (70) formant un élément creux et ayant un profil interne saillant, dans lequel le profil interne saillant correspond au profil externe du porte-lentille (20) de sorte que, lorsque le porte-lentille (20) est reçu dans le châssis (70), le porte-lentille (20) soit limité à un déplacement linéaire dans le châssis (70) sans tourner par rapport au châssis (70) ;
au moins un élément d'enroulement octogonal (30) entourant le porte-lentille (20), dans lequel l'élément d'enroulement octogonal (30) est à même de limiter l'angle auquel la lentille (21) peut tourner dans le trou (23), afin de protéger le porte-lentille (20) contre une structure interne endommagée par une force de torsion excessive ;
au moins un élément élastique (50) raccordé au porte-lentille (20) et à l'élément d'enroulement octogonal (30), dans lequel le ou les éléments élastiques (50) supportent et raccordent le porte-lentille (20) au châssis (70), de sorte que le porte-lentille (20) soit suspendu au centre du châssis (70), et dans lequel le au moins un élément élastique (50) comprend un ressort à lames supérieur (51), lequel ressort à lames supérieur est raccordé au porte-lentille (20), au châssis (70) et à la coiffe supérieure (60), et deux ressorts à lames inférieurs (52) raccordés au porte-lentille (20) et au châssis (70) ; et
quatre éléments magnétiques (40) placés sur le côté externe de quatre des huit côtés de l'élément d'enroulement octogonal (30) de façon à être espacés de manière égale l'un de l'autre et ayant un élément annulaire externe commun (41), qui a la forme d'un octogone ;
dans lequel le porte-lentille (20) est aménagé dans une position prédéterminée avec une section saillante (25), qui est comprimée contre une partie inférieure du châssis creux (70) et est supportée par celle-ci, de sorte que le ressort à lames inférieur (52) soit incurvé pour produire une force vers le bas, qui maintient toujours le porte-lentille en place que le porte-lentille (20) soit tourné vers le haut ou vers le bas, ou en position horizontale ;
dans lequel le ou les éléments d'enroulement (3) et le ou les éléments magnétiques (40) coopèrent entre eux lors du fonctionnement du mécanisme de focalisation de lentille miniature pour entraîner le porte-lentille (20) à se déplacer linéairement en avant ou en arrière dans le châssis (70) le long de l'axe (22),
de sorte que le mécanisme de focalisation de lentille miniature soit adapté pour transmettre un courant, une fois appliqué, via le ou les éléments élastiques (50) à ou aux éléments d'enroulement octogonaux (30), de sorte qu'une force d'actionnement se produise entre l'élément d'enroulement octogonal (30) et l'élément magnétique (40) pour déplacer le porte-lentille (20) et, en conséquence, atteindre l'objectif de focalisation de la lentille.

2. Mécanisme de focalisation de lentille miniature selon la revendication 1, dans lequel le ou les ressorts à lames supérieurs (51) ont au moins une section en serpentin (55).

3. Mécanisme de focalisation de lentille miniature selon la revendication 1, dans lequel le ou les éléments magnétiques (40) sont placés sur une paroi interne de l'élément annulaire octogonal externe (41).
